# EUROPÄISCHE PATENTSCHRIFT

(11) **EP 1 305 998 B1**
(45) Veröffentlichungstag und Bekanntmachung des Hinweises auf die Patenterteilung: **21.02.2007**
(21) Anmeldenummer: 02102480.7
(22) Anmeldetag: 24.10.2002
(51) Int. Cl.: A01D 45/02

(54) **Einzugs- und Pflückeinrichtung**
Gathering and picking device
Dispositif d'introduction et de cueillage

(30) Priorität: 27.10.2001 DE 10153198
(43) Veröffentlichungstag der Anmeldung: 02.05.2003
(73) Patentinhaber: Maschinenfabrik Kemper GmbH & Co. KG, 48973 Stadtlohn (DE)
(72) Erfinder: Wübbels, Richard, 46414, Rhede (DE); Wolters, Norbert, 48712, Gescher (DE)
(74) Vertreter: Holst, Sönke

(56) Entgegenhaltungen:
- EP-A- 1 161 857
- FR-A- 1 269 522
- US-A- 2 110 471
- US-A- 2 440 791
- US-A- 2 501 782
- US-A- 2 571 865
- US-A- 4 377 062

## Beschreibung

Die Erfindung betrifft eine Einzugs- und Pflückeinrichtung, mit einer einen Pflückspalt umfassenden Pflückeinrichtung, die eingerichtet ist, Fruchtstände von auf einem Feld stehenden Pflanzen abzutrennen, wobei am eingangsseitigen Bereich des Pflückspalts ein erstes Förderelement und ein oberhalb des ersten Förderelements angeordnetes, zweites Förderelement vorhanden sind, welche die Pflanzen im Zusammenwirken in den Pflückspalt fördern.

Pflücker finden in der landwirtschaftlichen Erntetechnik Verwendung, um die Fruchtstände von Pflanzen von den übrigen Teilen der Pflanzen zu trennen. Derartige Pflücker weisen in der Regel zwei Pflückwalzen auf, zwischen denen der Pflanzenstängel eingezogen wird. Gelegentlich wird auch nur eine Pflückwalze verwendet, die mit einer festen Wand zusammenwirkt. Die Pflückwalze oder -walzen ziehen die Pflanze durch einen Pflückspalt hindurch, dessen Abmessungen enger als die des Fruchtstandes sind. Dadurch wird der Fruchtstand, beispielsweise ein Maiskolben, von den Resten der Pflanze getrennt und kann separat verarbeitet werden.

In der US 2 571 865 A ist ein Maispflücker beschrieben, bei dem die Pflanzenstängel durch einen Kettenförderer mit daran befestigten Mitnehmer in und durch den Pflückspalt gezogen werden. Auf der dem Kettenförderer gegenüberliegenden Seite des Pflückspalts und oberhalb des Kettenförderers ist eine sich in Fahrtrichtung erstreckende Förderschnecke angeordnet. Die Förderschnecke ist das erste der sich bewegenden Teile des Pflückers, die mit den Maisstängeln in Berührung kommt. Ihr Zweck ist, die Stängel gleichmäßig an die Stelle zu fördern, an der die Stängel mit den als Pflückwalzen wirkenden rotierenden Messern in Berührung kommen. Etwa an dieser Stelle endet auch die Förderschnecke.

Die US 4 377 062 A zeigt einen Maispflücker, bei dem eine Förderschnecke oberhalb der Pflückwalzen angeordnet ist. Sie fördert die Pflanzenstängel in und durch den Pflückspalt. Auch transportiert sie die gepflückten Fruchtstände ab. Auf der der Förderschnecke gegenüber liegenden Seite des Pflückspalts befindet sich am Einlass des Pflückspalts unterhalb des Pflückspalts ein unteres Einzugsrad. Ein oberes Einzugsrad ist koaxial zum unteren Einzugsrad oberhalb der Förderschnecke angeordnet. Die Einzugsräder dienen dazu, die Pflanzen in den Pflückspalt zu fördern.

In der DE 197 34 747 A ist ein Maisernte-Vorsatzgerät zum Anbau an eine selbstfahrende Erntemaschine beschrieben, das auf einem Feld stehende Pflanzen reihenunabhängig mäht und die Maiskolben von den Pflanzen pflückt. Das Gerät weist zum reihenunabhängigen Erfassen und Abmähen der Pflanzen ein Mähwerk mit einer rotierenden, am Außenumfang mit Aussparungen versehenen Trommel und einem darunter rotierenden Messer auf, wie es von Maisgebissen her bekannt ist. Die Pflanzen werden stromab des Mähwerks angebrachten, konventionellen Pflückaggregaten zugeführt. Es sind Ausräumscheiben oder in den Laufkreis des Mähwerks eintauchende Spitzen der Pflückwalzen vorgesehen, um die zu verarbeitenden Pflanzen vom Mähwerk abzunehmen und in das Pflückaggregat einzuführen. Die abgetrennten Kolben der Pflanzen werden durch zwei oberhalb des Pflückspalts angeordnete Kettenförderer abtransportiert. Als nachteilig ist dabei anzusehen, dass sich der Übergang abgereifter, weicher Stängel in das Pflückaggregat als problematisch erweisen kann.

In der nachveröffentlichten DE 100 28 887 A wird eine Einzugsund Pflückeinrichtung zum Pflücken stängelartiger Pflanzen beschrieben, bei dem die Pflanzen durch ein um eine etwa vertikale Achse rotierendes Einzugselement in einen Pflückspalt verbracht werden. Am Einlass des Pflückspalts sind zwei Förderelemente in Form von Förderschnecken vorgesehen, von denen eines oberhalb und eines unterhalb des Pflückspalts angeordnet sind. Die beiden Förderer sind an der dem Einzugselement gegenüber liegenden Seite des Pflückspalts angeordnet und weisen übereinstimmende Fördergeschwindigkeiten auf. Das obere Einzugselement verhindert, dass insbesondere abgereifte, weiche Pflanzen am Eingang des Pflückspalts, an dem sie um einen relativ spitzen Winkel nach hinten umgelenkt werden, abknicken. Wegen der übereinstimmenden Fördergeschwindigkeiten der beiden Förderer verbleibt die Pflanze in einer vertikalen Stellung.

Die der Erfindung zugrunde liegende Aufgabe wird darin gesehen, eine verbesserte Einzugs- und Pflückeinrichtung bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das erste Förderelement und das darüber angeordnete zweite Förderelement fördern die Pflanze in den Eingang des Pflückspalts hinein, d. h. fördern sie in einer in der Längsrichtung des Pflückspalts verlaufenden Förderrichtung. Es wird vorgeschlagen, dass die Fördergeschwindigkeit des zweiten Förderelements größer ist als die des ersten Förderelements.

Auf diese Weise erreicht man, dass der obere Teil der Pflanze sich nach hinten in Richtung auf den Pflückspalt zu neigt. Dadurch bewegt sich der obere Teil der Pflanze schneller in eine Position über der Pflückeinrichtung als bei einer Pflanze, deren ursprüngliche vertikale Orientierung aufrechterhalten bleibt. Durch diesen Effekt können die Fruchtstände der Pflanze schneller und sicherer in den Wirkungsbereich eines Förderers gebracht werden, der sie einer Weiterverarbeitung zuführt. Hierdurch werden die Verluste an Nutzteilen vermindert. Außerdem befinden sich weniger unerwünschte Pflanzenreste zwischen den Fruchtständen.

Um durch die beiden zusammenwirkenden Förderelemente zu erreichen, dass sich die Oberseite der Pflanzen über den Pflückspalt neigt, bietet es sich an, die beiden Förderelemente auf derselben Seite des Pflückspalts anzuordnen. Dadurch vermeidet man Biegemomente, welche die Pflanze quer zum Pflückspalt verbiegen, die bei einer gegenüberliegenden Anordnung der Förderelemente entstehen würden.

Vorzugsweise ist auf der dem zweiten Förderelement gegenüberliegenden Seite des Pflückspalts ein Einzugselement angeordnet, das Teile - insbesondere Stängel - von Pflanzen erfasst und in den Pflückspalt einführt. Das Einzugselement weist vorzugsweise eine relativ große Arbeitsbreite auf; es wirkt somit reihenunabhängig. Die vom Einzugselement an das eingangsseitige Ende des Pflückspalts herantransportierten Pflanzen kommen, noch bevor sie in die Pflückeinrichtung gelangt sind, in Berührung mit dem ersten und dem zweiten Förderelement. Das zweite Förderelement fördert die Pflanzen im Zusammenwirken mit dem ersten Förderelement und dem Einzugselement in den Pflückspalt hinein und neigt sie wegen seiner gegenüber dem ersten Förderelement höheren Fördergeschwindigkeit über den Pflückspalt. Die Förderrichtung des Förderelements und die Längsrichtung des Pflückspalts verlaufen vorzugsweise parallel zueinander, so dass das Förderelement die Pflanzen problemlos in den Pflückspalt einführen kann.

Durch das zweite Förderelement ist insbesondere bei relativ weichen Stängeln ein unproblematisches Einführen der Pflanzen in den Pflückspalt gewährleistet, da es eine zusätzliche Abstützung und Förderung der Pflanzen ermöglicht. Wegen der Stützwirkung des zweiten Förderelements ist ein Abknicken oder Einquetschen der Pflanzen zwischen Einzugselement und dem Rand des Pflückspalts nicht zu befürchten. Das Einzugselement, an dem die Pflanze anliegt, stützt die Pflanze wiederum entgegen seiner Förderrichtung und auf der dem zweiten Förderelement gegenüber liegenden Seite ab.

Das Einzugselement kann außerdem dazu dienen, die Pflanzen über die wirksame Länge der Pflückeinrichtung zu transportieren, also den Teil der Länge der Pflückeinrichtung, in dem die Pflückeinrichtung die Pflanze bearbeitet, d. h. einzieht und die Nutzteile von Resten der Pflanze trennt.

Das Einzugselement kann sich um eine zumindest etwa vertikale Achse drehen und mit nach außen weisenden Fingern versehen sein, die zum Erfassen und Transportieren von Teilen, insbesondere Stängeln, der Pflanze dienen. Denkbar wäre auch die Verwendung eines an sich bekannten Kettenförderers mit Mitnehmern. Der Kettenförderer kann ein Trum aufweisen, welches quer zur Vorwärtsbewegungsrichtung der Einzugs- und Pflückeinrichtung verläuft, um eine Vergrößerung der Arbeitsbreite zu erreichen. Ein weiteres Trum würde dann die Pflanze in den Pflückspalt ziehen.

Die Finger des rotierenden Einzugselements haben vorzugsweise vorlaufende Oberflächen mit abweisendem Förderverhalten, stoßen also eindringende Pflanzenteile nach außen ab. Dieses Förderverhalten kann durch eine entgegen der Drehrichtung nachlaufende Krümmung der Finger des Einzugselements erzielt werden. Man erreicht dadurch, dass ein Stängel einer Pflanze vom Einzugselement nach außen gedrückt wird und vermeidet, dass der Stängel aggressiv nach innen gezogen wird und sich zwischen dem Abstreifblech und dem Finger einklemmt. Alternativ oder zusätzlich zur Krümmung der Finger wäre eine gesteuerte, radiale bzw. azimutale Bewegung der Finger relativ zur Welle des Einzugselements denkbar, wie sie von Haspeln bzw. Förderschnecken von Schneidwerken her bekannt ist, und durch eine Exzentersteuerung o. ä. erzielt werden kann, um ein abweisendes Förderverhalten zu erzielen.

In einer bevorzugten Ausführungsform ist das zweite Förderelement oberhalb des Pflückspalts und auch oberhalb des Einzugselements angeordnet, insbesondere unmittelbar darüber. Dadurch erreicht man, dass die Pflanzen sich zwischen dem zweiten Förderelement und dem Einzugselement nicht wesentlich verbiegen können, was ein Einführen in den Pflückspalt erschweren würde.

Das erste Pflückelement ist hingegen vorzugsweise unterhalb des Pflückspalts angeordnet. Dort kann es den zum Aufrechterhalten der Pflanze in einer etwa vertikalen Stellung notwendigen Halt bieten.

Das erste und/oder zweite Förderelement ist vorzugsweise eine Förderschnecke, die sich über einen Bereich (bezüglich der Bewegungsrichtung der Pflanzen) stromauf des Pflückspalts und über wenigstens einen Teil der Länge des Pflückspalts erstreckt. Es ist zwar denkbar, sie über die gesamte Länge des Pflückspalts verlaufen zu lassen, um die Pflanzen entlang des Pflückspalts zu transportieren, was aber nicht unbedingt nötig ist, da der Transport der Pflanzen über die Länge des Pflückspalts durch das Einzugselement oder einen anderen Förderer erfolgen kann, beispielsweise eine mit wendelförmigen Mitnehmern versehene Pflückwalze. Aus Kosten- und Gewichtsgründen ist daher eine relativ kurze Förderschnecke bevorzugt, die nur das eingangsseitige Ende des Pflückspalts und einen Bereich - in Bewegungsrichtung der Pflanzen betrachtet - davor und dahinter überdeckt. Anstelle einer Förderschnecke kann auch ein von Maispflückern an sich bekannter, jedoch demgegenüber verkürzter und entgegen der Bewegungsrichtung der Pflanzen (also stromaufwärts) versetzter Kettenförderer mit Mitnehmern zum Erfassen und Einführen der Pflanzen in den Pflückspalt Verwendung finden.

Die unterschiedlichen Fördergeschwindigkeiten des ersten und des zweiten Förderelements können durch unterschiedliche Drehzahlen und/oder unterschiedliche Steigungen von Förderwendeln und/oder unterschiedliche Durchmesser erzielt werden. Unterschiedliche Drehzahlen lassen sich durch unabhängige Antriebe erzielen, beispielsweise Hydraulikmotoren. Der Antrieb des zweiten Förderelements kann auch durch das erste Förderelement bzw. umgekehrt erfolgen, wobei zwischen ihnen ein Getriebe vorhanden ist. Durch geeignete Wahl des Übersetzungsverhältnisses des Getriebes wird das gewünschte Drehzahl- und Geschwindigkeitsverhältnis erzielt. Denkbar ist auch, anstelle eines Getriebes mit fester Übersetzung einen Variatorantrieb zwischen das erste und zweite Förderelement bzw. umgekehrt zu schalten.

Das erste Förderelement ist vorzugsweise an dem bezüglich der Bewegungsrichtung der Pflanzen durch den Pflückspalt stromaufwärts liegenden Bereich einer Pflückwalze der Pflückeinrichtung angeordnet. Das erste Förderelement ist somit koaxial zur Pflückwalze an dessen in Bewegungsrichtung der Pflanzen stromaufwärts angeordnetem Bereich angebracht.

Zum Antrieb des zweiten Förderelements kann ein Getriebe dienen, das eine Antriebsverbindung zwischen einer angetriebenen Pflückwalze der Pflückeinrichtung bzw. dem ersten Förderelement und dem zweiten Förderelement herstellt. Das Getriebe ist vorteilhafterweise an der (bezüglich der Bewegungsrichtung der Pflanzen) stromaufwärts liegenden Seite der Pflückwalze und des zweiten Förderelements angeordnet. Diese Seite liegt in der Regel in Vorwärtsfahrtrichtung der Einzugs- und Pflückeinrichtung vorn.

Grundsätzlich wäre es denkbar, das zweite Förderelement an seinen beiden Enden an einem ortsfesten Element, insbesondere (direkt oder indirekt) am Rahmen, Gestell oder dergleichen der Einzugs- und Pflückeinrichtung abzustützen. In der Regel reicht es aber aus, es nur an einem Ende abzustützen und drehbar zu lagern. Dabei handelt es sich zweckmäßigerweise um das dem Getriebe zugewandte Ende des zweiten Förderelements.

Das erste Förderelement und das zweite Förderelement enden vorzugsweise genau übereinander. An dieser Stelle beginnen die Pflückwalzen auf die Pflanzen einzuwirken und sie nach unten einzuziehen.

In den Zeichnungen ist ein nachfolgend näher beschriebenes Ausführungsbeispiel der Erfindung dargestellt. Es zeigt:
- Fig. 1: eine Draufsicht auf eine Einzugs- und Pflückeinrichtung einer Erntegutbergungsvorrichtung;
- Fig. 2: eine Seitenansicht der Einzugs- und Pflückeinrichtung aus Figur 1; und
- Fig. 3: einen vertikalen Schnitt durch die Einzugs- und Pflückeinrichtung aus Figur 1.

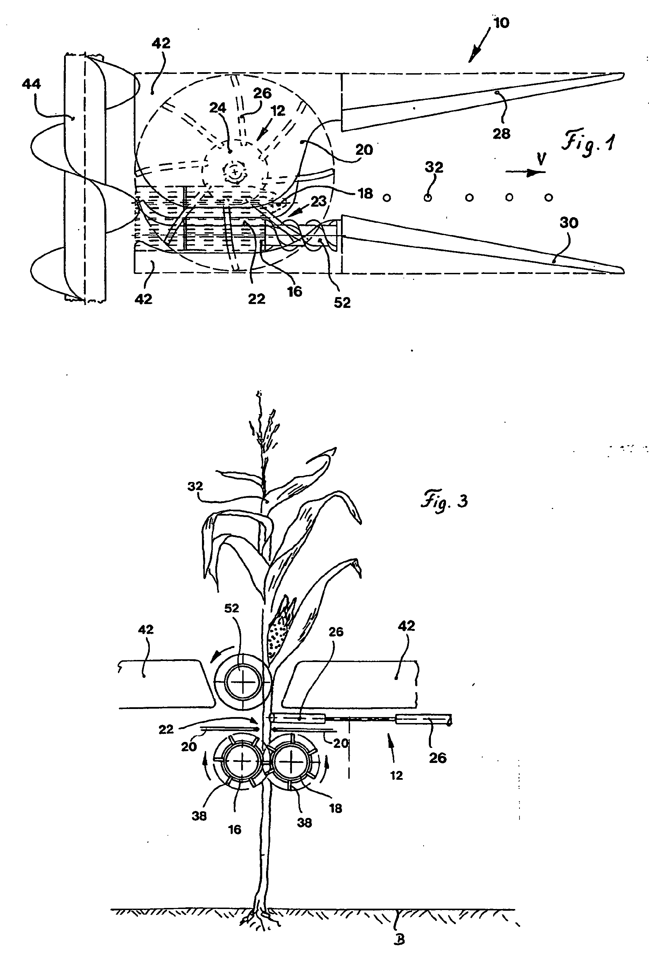

In Figur 1 ist eine Einzugs- und Pflückeinrichtung 10 einer Erntegutbergungsvorrichtung dargestellt. Eine vollständige Erntegutbergungsvorrichtung weist in der Regel eine Mehrzahl von Einzugs- und Pflückeinrichtungen 10 auf, obwohl auch denkbar wäre, eine Erntegutbergungsvorrichtung mit nur einer einzelnen Einzugs- und Pflückeinrichtung 10 zu versehen. Finden mehrere Einzugs- und Pflückeinrichtungen 10 Verwendung, können sie gleichartig oder symmetrisch zur Längsmittelebene der Erntegutbergungsvorrichtung gestaltet sein.

Die Einzugs- und Pflückeinrichtung 10 weist ein oberes Einzugselement 12, das zum Erfassen und Einziehen der zu erntenden Pflanze dient, ein drehbares Häckselmesser 14, sowie eine Pflückeinrichtung mit einer ersten Pflückwalze 16 und einer zweiten Pflückwalze 18 auf, die unterhalb eines in einem Abstreifblech 20 eingebrachten Pflückspalts 22 angeordnet sind.

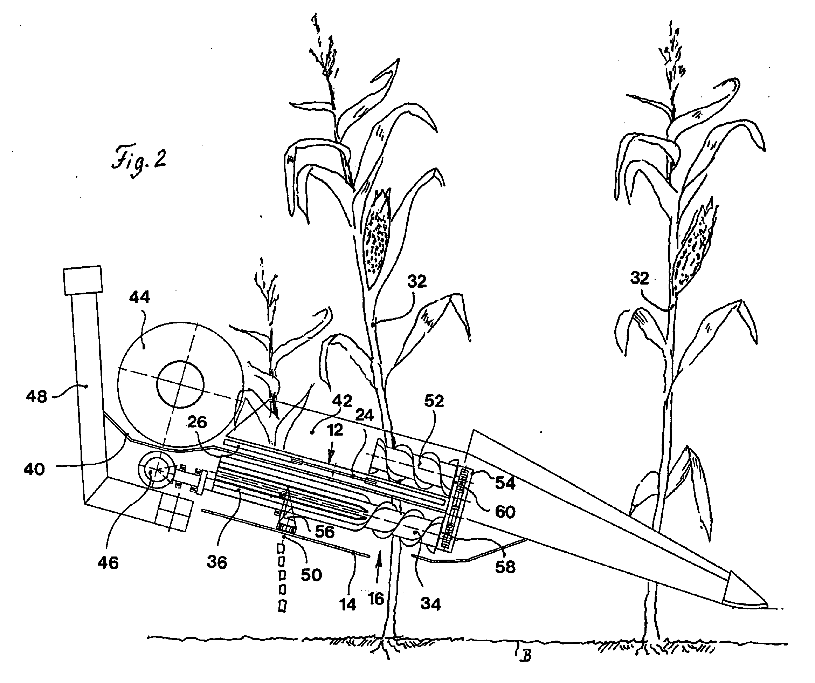

Das Einzugselement 12 ist um eine vertikal verlaufende Achse drehbar angeordnet und wird durch einen - in den Zeichnungen nicht erkennbaren - Antrieb in Rotation versetzt, in Figur 1 im Uhrzeigersinn. Das Einzugselement 12 ist oberhalb des Abstreifblechs 20 angeordnet und hat eine leicht nach vorn geneigte Drehachse, da in Figur 2 die Linie B die Bodenlinie darstellt. Das Einzugselement 12 besteht in seinem grundsätzlichen Aufbau aus einer zentralen Scheibe 24 mit über ihren Umfang verteilten, sich im Wesentlichen radial erstreckenden Fingern 26, die in der Ebene der Scheibe 24 entgegen der Drehrichtung, also nachlaufend gekrümmt sind. Die Finger 26 haben daher ein abweisendes Förderverhalten.

Wie anhand der in Figur 1 dargestellten Draufsicht auf die Einzugs- und Pflückeinrichtung 10 erkennbar ist, sind den Einzugselementen 14, 16 in Vorwärtsbewegungsrichtung V der Erntegutbergungsvorrichtung Stängelteiler 28, 30 vorgeordnet, die Pflanzen 32, welche nicht genau vor dem Einzugselement 12, stehen, während der Bewegung der Einzugs- und Pflückeinrichtung 10 in Vorwärtsfahrtrichtung V über das Feld jeweils nach innen drücken bzw. biegen, so dass sie in den Wirkbereich des Einzugselements 12 gelangen. Auch die in Vorwärtsbewegungsrichtung vorlaufende Kante des Abstreifblechs 20 ist derart gekrümmt, dass die Stängel der Pflanzen 32 in den Wirkbereich des Einzugselements 12 gedrückt werden. Der Wirkbereich des Einzugselements 12 ist derart groß, dass die Einzugs- und Pflückeinrichtung 10 - im Zusammenwirken mit der gekrümmten vorlaufenden Kante des Abstreifblechs 20 und den Stängelteilern 28, 30 - reihenunabhängig arbeitet. Die Arbeitsbreite der Einzugs- und Pflückeinrichtung entspricht somit dem seitlichen Abstand der Spitzen der Stängelteiler 28, 30.

Anhand der Figur 1 ist die Wirkungsweise des Einzugselements 12 gut erkennbar. Ein Stängel einer auf dem Feld stehenden Pflanze 32 gerät - nachdem er (abhängig von seiner seitlichen Position) gegebenenfalls durch die Stängelteiler 28, 30 und/oder die vorlaufende Kante des Abstreifblechs 20 in Richtung auf den Pflückspalt 22 verbogen wurde - mit einem Finger 26 des Einzugselements 12 in Berührung. Der Stängel wird von der vorlaufenden Oberfläche des Fingers 26 mitgeführt und aufgrund der nachlaufenden und daher abweisenden Krümmung des Fingers 26 nach außen gedrückt. Auf diese Weise wird der Stängel der Pflanze 32 durch den Finger 26 in den Pflückspalt 22 transportiert, der sich zumindest näherungsweise parallel zur Vorwärtsbewegungsrichtung V erstreckt und zwischen der ersten Pflückwalze 16 und dem Einzugselement 12 in das Abstreifblech 20 eingebracht ist. Dabei wird die noch nicht vom Boden des Feldes getrennte Pflanze 32 (s. Figur 3) gegebenenfalls verbogen.

Die erste Pflückwalze 16 ist seitlich neben dem Einzugselement 12 angeordnet und leicht nach vorn und unten geneigt. Sie ist, betrachtet man die seitliche Richtung, parallel zur Vorwärtsbewegungsrichtung V orientiert. In vertikaler Richtung ist die erste Pflückwalze 16 unterhalb des Abstreifblechs 20 angeordnet. Im vorderen, bezüglich der Bewegungsrichtung der Pflanzen 32 stromaufwärts liegenden Bereich der ersten Pflückwalze 16 befindet sich ein Schneckenförderer 34, der in Zusammenwirken mit dem Einzugselement 12 den Stängel der Pflanze 32 in den Pflückspalt 22 einzieht. Der eingangsseitige Bereich 23 des Pflückspalts 22 liegt bezüglich der Vorwärtsbewegungsrichtung V vor der Drehachse des Einzugselements 12 an der Stelle, an der der sich in Bewegungsrichtung der Pflanzen 32 zunächst verengende Abstand zwischen den beiden Teilen des Abdeckbleches 20 seinen über die Länge des Pflückspalts 22 konstanten Wert angenommen hat. Der Endbereich des Pflückspalts 22 ist jedoch in Richtung auf die Drehachse des Einzugselements 12 zu gekrümmt.

Beim Eintritt der Pflanzen 32 in den Pflückspalt 22 ergibt sich ein relativ stumpfer Winkel zwischen den Fingern 26 des Einzugselements 12 und dem ihnen gegenüberliegenden (in Figur 1 unten eingezeichneten) Rand des Abstreifblechs 20. Der Stängel der Pflanzen 32 kann aufgrund dieses stumpfen Winkels zwischen Abstreifblech 20 und Finger 26 abgequetscht werden, insbesondere wenn es sich um stark abgereifte und somit weiche Stängel von Maispflanzen handelt. Die Pflanze 32 wird in diesem Fall nicht weitertransportiert, so dass die Einzugs- und Pflückeinrichtung 10 verstopft.

Zur Lösung dieses Problems ist oberhalb des eingangsseitigen Bereichs 23 des Pflückspalts 22 und oberhalb des Einzugselements 12 ein zweites Förderelement 52 in Form einer Förderschnecke angeordnet. Die Längs- und Förderrichtung des zweiten Förderelements 52 erstreckt sich parallel zur ersten Pflückwalze 16. Das zweite Förderelement 52 weist etwa 1/3 der Länge der ersten Pflückwalze 16 auf und wird mittels eines Getriebes 54 in Drehung versetzt, welches eine Antriebsverbindung mit der vorderen Stirnseite der ersten Pflückwalze 16 herstellt. Die erste Pflückwalze 16 leitet somit das Antriebsmoment von der Welle 46 zum zweiten Förderelement 52 durch. Das Gehäuse des Getriebes 54 ist am Abstreifblech 20 befestigt. Das zweite Förderelement 52 ist nur an seiner in Vorwärtsfahrtrichtung V vorderen Stirnseite am Getriebe 54 gelagert, an seiner hinteren Stirnseite ist es jedoch nicht gelagert oder abgestützt. Das Getriebe 54 umfasst ein unteres Zahnrad 58, das koaxial zur ersten Pflückwalze 16 an dessen Stirnseite angeordnet ist und durch die Pflückwalze 16 angetrieben wird. Das untere Zahnrad 58 kämmt mit einem oberen Zahnrad 60, das koaxial zum zweiten Förderelement 52 angeordnet ist und über eine Welle starr mit ihm verbunden ist. Das obere Zahnrad 60 hat weniger Zähne als das untere Zahnrad 58, so dass das zweite Förderelement 52 mit einer höheren Drehzahl angetrieben wird als die erste Pflückwalze 16 und der Schneckenförderer 34.

Der von einem Finger 26 des Einzugselements 12 erfasste Stängel einer Pflanze 32 wird durch den Finger 26 gegen das zweite Förderelement 52 gedrückt. Der Schneckenförderer 34 dient als erstes Förderelement.

Die Fördergeschwindigkeit des zweiten Förderelements 52 ist somit etwas höher als die des Schneckenförderers 34. Die Geschwindigkeit des Bereichs des Einzugselements 12, der eine von den beiden Förderelementen geförderte Pflanze 32 berührt, liegt zwischen diesen zwei Geschwindigkeiten. Dadurch wird die Pflanze 32 von den Förderelementen und dem Einzugselement 12 nach hinten in den Pflückspalt 22 verbracht, wobei ihr oberer Teil aufgrund der höheren Fördergeschwindigkeit des ersten Förderelements 52 in der Förderrichtung im Pflückspalt 22 nach hinten gebogen wird, was anhand der in Figur 2 links eingezeichneten Pflanze 32 erkennbar ist. Dadurch erreicht man, dass aufgrund der wirkenden Beschleunigung eventuell abfallende Fruchtstände nicht auf den Erdboden, sondern in den Wirkungsbereich der Fördereinrichtung 12 gelangen, die sie der Förderschnecke 44 zuführen.

Das zweite Förderelement 52 stellt der Pflanze 32 oberhalb des Fingers 26 des Einzugselements 12 eine Abstützung und Förderung bereit. Durch das Zusammenspiel der beiden Förderelemente und des Fingers 28 wird die Pflanze 32 sicher gehalten und geradlinig in den Pflückspalt 22 und zwischen die Pflückwalzen 16, 18 geführt und ihr oberer Teil wird leicht nach hinten geneigt. Die Pflanze wird an drei Punkten abgestützt, so dass ein Abknicken oder -quetschen nicht mehr zu befürchten ist. Zusätzlich wird durch das zweite Förderelement 52 das Einzugsverhalten der Einzugs- und Pflückeinrichtung 10 erheblich aggressiver.

Im Ergebnis gelangt der Stängel der Pflanze 32 durch die Förderwirkung des Schneckenförderers 34, des zweiten Förderelements 52 und des Einzugselements 12 in den Wirkungsbereich der zweiten Pflückwalze 18, deren vordere Spitze (bezüglich der Vorwärtsbewegungsrichtung V betrachtet) ebenfalls vor der Drehachse des Einzugselements 12 liegt. Die zweite Pflückwalze 18 ist parallel zur ersten Pflückwalze 16 orientiert und zwischen letzterer und der Drehachse des Einzugselementes 12 angeordnet, wobei der zwischen der ersten Pflückwalze 16 und der zweiten Pflückwalze 18 definierte Spalt vertikal unterhalb des Pflückspalts 22 angeordnet ist. Der hintere Bereich 36 der ersten Pflückwalze 16, dessen Länge der Länge der zweiten Pflückwalze 18 entspricht, und die zweite Pflückwalze 18 sind in an sich bekannter Weise mit axial verlaufenden, nach außen überstehenden Mitnehmern 38 versehen, wie sie am besten in Figur 3 erkennbar sind. Bezüglich der Figur 3 rotiert die erste Pflückwalze 16 im Uhrzeigersinn, die zweite Pflückwalze 18 im Gegenuhrzeigersinn. Die erste Pflückwalze 16 und der hintere Bereich 36 der zweiten Pflückwalze 18 ziehen den Stängel der Pflanze 32 nach unten ein. Dabei dient das Abstreifblech 20 beidseits des Pflückspalts 22 zum Abstreifen von Nutzeilen der Pflanze 32.

Das zweite Förderelement 52 endet genau oberhalb des vorderen Endes der zweiten Pflückwalze 18 und des Anfangs des hinteren Bereichs 36 der ersten Pflückwalze 16. Sobald die Pflanze 32 von den Pflückwalzen 16, 18 nach unten eingezogen wird, endet somit die Förderung durch das zweite Förderelement 52 und den Schneckenförderer 34 der ersten Pflückwalze 16.

Während des Pflückvorgangs bewirken die Finger 26 des Einzugselements 12, dass die Pflanze 32 über die Länge des Pflückspalts 22 transportiert wird. Die Drehzahlen der Pflückwalzen 18, 20 und des Einzugselements 12 sind vorzugsweise derart bemessen, dass die gesamte Pflanze 22 in den Pflückspalt 22 nach unten eingezogen wurde, wenn das Ende des Pflückspalts 22 erreicht ist.

Die durch die Pflückeinrichtung abgetrennten Nutzteile der Pflanzen 32, wie Maiskolben, Fruchtstände von Sonnenblumen usw. werden durch das Einzugselement 12 in einen an der Rückseite der Einzugs- und Pflückeinrichtung 10 angeordneten Trog 40 gefördert, wobei eine Abdeckung 42 beidseits des Pflückspalts 22 einen zum Trog 40 führenden Kanal definiert, durch den die Nutzteile der Pflanzen 32 gefördert werden. Die Abdeckung 42 überdeckt das Einzugselement 12 und das zweite Förderelement 52 teilweise und erhöht durch ihre Abschirmwirkung die Funktionsund Arbeitssicherheit der Einzugs- und Pflückeinrichtung 10. Der Trog 40 kann mit dem Abstreifblech 20 einteilig oder ein davon getrenntes, separates Element sein. Eine oberhalb des Trogs 40 angeordnete, quer zur Vorwärtsfahrtrichtung orientierte Förderschnecke 44 transportiert die Nutzteile zu einem Erntefahrzeug (z. B. Mähdrescher oder Feldhäcksler) oder auf einen Anhänger. Unterhalb des Trogs 40 ist eine Welle 46, die zum Antrieb der beiden Pflückwalzen 16, 18, des Häckselmessers 14, des Förderelements 52 und des Einzugselements 12 der Einzugs- und Pflückeinrichtungen 10 dient. Die Welle 46 steht mit dem Motor eines die Erntegutbergungsvorrichtung tragenden Fahrzeugs in Antriebsverbindung. Ein Rahmen 48 trägt die Einzugs- und Pflückeinrichtungen 10 der Erntegutbergungsvorrichtung, die alle durch die Welle 46 angetrieben werden.

Die Reste der Pflanze 32, die von den Pflückwalzen 16, 18 nach unten abtransportiert werden, gelangen in den Wirkungsbereich des rotierenden, vierarmigen Häckselmessers 14 und werden durch dieses in einzelne Stücke zerteilt. Auf dem Feld werden somit gehäckselte Pflanzenreste abgelegt. Während des Zerteilens halten die Pflückwalzen 16, 18 die Pflanze 32 fest. Das Häckselmesser 14 rotiert um eine vertikal verlaufende Drehachse 50, die bezüglich der Vorwärtsbewegungsrichtung V zwischen der Drehachse des Einzugselements 12 und der Förderschnecke 44 angeordnet ist, wie Figur 2 erkennbar ist, und wird durch die Welle 46 über ein Winkelgetriebe 56 angetrieben. In vertikaler Richtung ist das Häckselmesser 14 unterhalb der Pflückwalzen 16, 18 positioniert. Die Drehrichtung des Häckselmessers 14 ist, betrachtet man Figur 1, im Uhrzeigersinn, so dass das gehäckselte Gut seitlich nach hinten geschleudert wird.

## Patentansprüche

1. Einzugs- und Pflückeinrichtung (10), mit einer einen Pflückspalt (22) umfassenden Pflückeinrichtung, die eingerichtet ist, Fruchtstände von auf einem Feld stehenden Pflanzen (32) abzutrennen, wobei am eingangsseitigen Bereich (23) des Pflückspalts (22) ein erstes Förderelement und ein oberhalb des ersten Förderelements angeordnetes, zweites Förderelement (52) vorhanden sind, welche die Pflanzen (32) im Zusammenwirken in den Pflückspalt (22) fördern, **dadurch gekennzeichnet, dass** die Fördergeschwindigkeit des zweiten Förderelements (52) höher ist als die Fördergeschwindigkeit des ersten Förderelements.

2. Einzugs- und Pflückeinrichtung (10) nach Anspruch 1, **dadurch gekennzeichnet, dass** das erste Förderelement und das zweite Förderelement (52) auf derselben Seite des Pflückspalts (22) angeordnet sind.

3. Einzugs- und Pflückeinrichtung (10) nach Anspruch 1 oder 2, **dadurch gekennzeichnet, dass** auf der dem zweiten Förderelement (52) gegenüber liegenden Seite des Pflückspalts ein Einzugselement (12) angeordnet ist, das die Pflanzen in den Pflückspalt (22) einführt.

4. Einzugs- und Pflückeinrichtung (10) nach Anspruch 3, **dadurch gekennzeichnet, dass** das Einzugselement (12) die Pflanzen (32) über die Länge des Pflückspalts (22) transportiert.

5. Einzugs- und Pflückeinrichtung (10) nach Anspruch 3 oder 4, **dadurch gekennzeichnet, dass** das Einzugselement (12) um eine etwa vertikale Achse rotierend angetrieben ist.

6. Einzugs- und Pflückeinrichtung (10) nach einem der Ansprüche 3 bis 5, **dadurch gekennzeichnet, dass** das zweite Förderelement (52) oberhalb des Pflückspalts (22) und gegebenenfalls oberhalb des Einzugselements (12) angeordnet ist.

7. Einzugs- und Pflückeinrichtung (10) nach einem der Ansprüche 1 bis 6, **dadurch gekennzeichnet, dass** das erste Förderelement unterhalb des Pflückspalts angeordnet ist.

8. Einzugs- und Pflückeinrichtung (10) nach einem der Ansprüche 1 bis 7, **dadurch gekennzeichnet, dass** das erste Förderelement und/oder das zweite Förderelement (52) eine Förderschnecke ist, die sich über einen Bereich stromauf des Pflückspalts (22) und wenigstens über einen Teil der Länge des Pflückspalts (22) erstreckt.

9. Einzugs- und Pflückeinrichtung (10) nach einem der Ansprüche 1 bis 8, **dadurch gekennzeichnet, dass** die unterschiedlichen Fördergeschwindigkeiten von erstem Förderelement und zweitem Förderelement (52) durch unterschiedliche Drehzahlen und/oder unterschiedliche Steigungen von Förderwendeln und/oder unterschiedliche Durchmesser der Förderelemente erzielt wird.

10. Einzugs- und Pflückeinrichtung (10) nach einem der vorhergehenden Ansprüche, **dadurch gekennzeichnet, dass** die Pflückeinrichtung eine Pflückwalze (16) umfasst, an deren bezüglich der Bewegungsrichtung der Pflanzen (32) stromaufwärts liegendem Bereich das erste Förderelement angeordnet ist.

11. Einzugs- und Pflückeinrichtung (10) nach einem der Ansprüche 1 bis 9, **dadurch gekennzeichnet, dass** das zweite Förderelement (52) über ein an seiner Vorderseite angeordnetes Getriebe (54) angetrieben wird, das von einer angetriebenen Pflückwalze (16) der Pflückeinrichtung und/oder dem ersten Förderelement angetrieben wird.

12. Einzugs- und Pflückeinrichtung (10) nach Anspruch 10, **dadurch gekennzeichnet, dass** das zweite Förderelement (52) nur am Getriebe (54) abgestützt ist.

13. Einzugs- und Pflückeinrichtung (10) nach einem der Ansprüche 1 bis 12, **dadurch gekennzeichnet, dass** die bezüglich der Bewegungsrichtung der Pflanzen (32) stromabwärts liegenden Enden des ersten Fördererelements und des zweiten Förderelements (52) übereinander liegen.

## Claims

1. A drawing in and picking device (10), with a picking device having a picking gap (22), which is arranged to separate off crop harvest from plants (32) standing in a field, wherein a first conveyor element and a second conveyor element (52) arranged above the first conveyor element are disposed on the input side region (23) of the picking gap (22), which elements in co-operation pass the plants (32) into the picking gap (22), **characterised in that** the feed rate of the second conveyor element (52) is higher than the feed rate of the first conveyor element.

2. A drawing in and picking device (10) according to claim 1, **characterised in that** the first conveyor element and the second conveyor element (52) are arranged on the same side of the picking gap (22).

3. A drawing in and picking device (10) according to claim 1 or 2, **characterised in that** on the side of the picking gap lying opposite to the second conveyor element (52) there is arranged a drawing in element (12), which introduces the plants to the picking gap (22).

4. A drawing in and picking device (10) according to claim 3, **characterised in that** the drawing in element (12) transports the plants (32) over the length of the picking gap (22).

5. A drawing in and picking device (10) according to claim 3 or 4, **characterised in that** the drawing in element (12) is driven in rotation about an approximately vertical axis.

6. A drawing in and picking device (10) according to any of claims 3 to 5, **characterised in that** the second conveyor element (52) is arranged above the picking gap (22) and optionally above the drawing in element (12).

7. A drawing in and picking device (10) according to any of claims 1 to 6, **characterised in that** the first conveyor element is arranged below the picking gap.

8. A drawing in and picking device (10) according to any of claims 1 to 7, **characterised in that** the first conveyor element and/or the second conveyor element (52) is a conveyor auger which extends over a region upstream of the picking gap (22) and at least over a part of the length of the picking gap (22).

9. A drawing in and picking device (10) according to any of claims 1 to 8, **characterised in that** the different conveyor speeds of the first conveyor element and the second conveyor element (52) are achieved by different speeds of rotation and/or different inclinations of conveyor paddles and/or different diameters of the conveyor elements.

10. A drawing in and picking device (10) according to any of the preceding claims, **characterised in that** the picking device comprises a picking roller (16), on whose region upstream of the direction of movement of the plants (32) the first conveyor element is arranged.

11. A drawing in and picking device (10) according to any of claims 1 to 9, **characterised in that** the second conveyor element (52) is driven through a transmission (54) arranged on its front side, which is driven from a driven picking roller (16) of the picking device and/or the first conveyor element.

12. A drawing in and picking device (10) according to claim 11, **characterised in that** the second conveyor element (52) is supported only on the transmission (54).

13. A drawing in and picking device (10) according to any of claims 1 to 12, **characterised in that** the ends of the first conveyor element and of the second conveyor element (52) lying downstream relative to the direction of movement of the plants (32) lie above one another.

## Revendications

1. Dispositif de cueillage et ramassage (10) comportant un dispositif de cueillage avec une fente de cueillage (22), qui est conçue pour détacher les épis des végétaux (32) dressés sur un champ, un premier élément de transport étant prévu dans la zone (23) du côté entrée de la fente de cueillage (22) et un deuxième élément de transport (52) étant prévu au-dessus du premier élément de transport, lesquels coopèrent pour transporter les végétaux (32) dans la fente de cueillage (22), **caractérisé en ce que** la vitesse de transport du deuxième élément de transport (52) est supérieure à la vitesse de transport du premier élément de transport.

2. Dispositif de cueillage et ramassage (10) selon la revendication 1, **caractérisé en ce que** le premier élément de transport et le deuxième élément de transport (52) sont disposés sur le même côté de la fente de cueillage (22).

3. Dispositif de cueillage et ramassage (10) selon la revendication 1 ou 2, **caractérisé en ce que**, sur le côté de la fente de cueillage (22), situé en face du deuxième élément de transport (52), est disposé un premier élément de ramassage (12) qui introduit les végétaux dans la fente de cueillage (22).

4. Dispositif de cueillage et ramassage (10) selon la revendication 3, **caractérisé en ce que** l'élément de ramassage (12) transporte les végétaux (32) sur la longueur de la fente de cueillage (22).

5. Dispositif de cueillage et ramassage (10) selon la revendication 3 ou 4, **caractérisé en ce que** l'élément de ramassage (12) est entraîné en rotation autour d'un axe sensiblement vertical.

6. Dispositif de cueillage et ramassage (10) selon l'une quelconque des revendications 3 à 5, **caractérisé en ce que** le deuxième élément de transport (52) est disposé au-dessus de la fente de cueillage (22) et, le cas échéant, au-dessus de l'élément de ramassage (12).

7. Dispositif de cueillage et ramassage (10) selon l'une quelconque des revendications 1 à 6, **caractérisé en ce que** le premier élément de transport est disposé en dessous de la fente de cueillage.

8. Dispositif de cueillage et ramassage (10) selon l'une quelconque des revendications 1 à 7, **caractérisé en ce que** le premier élément de transport et/ou le deuxième élément de transport (52) sont une vis de transport, qui s'étend sur une zone en amont de la fente de cueillage (22) et au moins sur une partie de la longueur de la fente de cueillage (22).

9. Dispositif de cueillage et ramassage (10) selon l'une quelconque des revendications 1 à 8, **caractérisé en ce que** les vitesses de transport différentes du premier élément de transport et du deuxième élément de transport (52) sont obtenues par les vitesses de rotation différentes et/ou les pas différents des spires de transport et/ou les diamètres différents des éléments de transport.

10. Dispositif de cueillage et ramassage (10) selon l'une quelconque des revendications précédentes, **caractérisé en ce que** le dispositif de cueillage comporte un rouleau de cueillage (16), dont la zone située en amont par rapport à la direction de déplacement des végétaux (32) reçoit le premier élément de transport.

11. Dispositif de cueillage et ramassage (10) selon l'une quelconque des revendications 1 à 9, **caractérisé en ce que** le deuxième élément de transport (52) est entraîné par l'intermédiaire d'un engrenage (54), qui est disposé sur son côté avant et qui est entraîné par un rouleau de cueillage (16) entraîné du dispositif de cueillage et/ou du premier élément de transport.

12. Dispositif de cueillage et ramassage (10) selon la revendication 10, **caractérisé en ce que** le deuxième élément de transport (52) est en appui uniquement sur l'engrenage (54).

13. Dispositif de cueillage et ramassage (10) selon l'une quelconque des revendications 1 à 12, **caractérisé en ce que** les extrémités, situées en aval par rapport à la direction de déplacement des végétaux (32), du premier élément de transport et du deuxième élément de transport (52) sont situées l'une au-dessus de l'autre.
